# EUROPÄISCHE PATENTSCHRIFT

(11) **EP 2 664 752 B1**
(45) Veröffentlichungstag und Bekanntmachung des Hinweises auf die Patenterteilung: **15.03.2017**
(21) Anmeldenummer: 13002419.3
(22) Anmeldetag: 07.05.2013
(51) Int. Cl.: F01L 1/02, F16H 57/022, F16H 55/18, F16H 55/17, F16H 57/12

(54) **Verfahren zur Kompensation einer Achsabstandsänderung am Steuertrieb einer ventilgesteuerten Brennkraftmaschine sowie Steuertrieb**
Method for the compensation of a change in the axle distance on the control device of a valve-controlled combustion engine and control device
Procédé de compensation d'une modification de distance d'axe sur la distribution d'un moteur à combustion interne commandé par soupape et distribution

(30) Priorität: 15.05.2012 DE 102012009605
(43) Veröffentlichungstag der Anmeldung: 20.11.2013
(73) Patentinhaber: MAN Truck & Bus AG, 80995 München (DE)
(72) Erfinder: Fink, Adrian, 90451 Nürnberg (DE); Patla, Michael, 90762 Fürth (DE); Zimmermann, Mark, 91 238 Offenhausen (DE)
(74) Vertreter: Liebl, Thomas

(56) Entgegenhaltungen:
- EP-A2- 0 767 326
- WO-A1-93/00530
- WO-A1-2010/025612
- AT-U1- 1 616
- DE-A1- 10 154 069
- DE-A1-102008 052 434
- DE-A1-102009 055 214
- FR-A1- 2 508 973
- US-A- 4 747 321

## Beschreibung

Die vorliegende Erfindung betrifft ein Verfahren zur Kompensation einer Achsabstandsänderung am Steuertrieb einer ventilgesteuerten Brennkraftmashine gemäß dem Oberbegriff des Patentanspruchs 1 und des Patentanspruchs 3 sowie einen Steuertrieb für eine ventilgesteuerte Brennkraftmaschine gemäß dem Oberbegriff des Patentanspruchs 8.

Um einen laufruhigen Steuertrieb auch bei auftretenden Wechselmomenten und exakte Ventilsteuerzeiten der Gaswechselventile an Brennkraftmaschinen sicherzustellen, müssen definierte Zahneingriffsverhältnisse und Achsabstände der miteinander kämmenden Stirnzahnräder sichergestellt werden, was im Neuzustand der Brennkraftmaschine kein Problem darstellt. Anders verhält es sich bei gegebenenfalls erforderlichen Reparaturfällen bzw. einer Maschinenüberholung, bei der zum Beispiel die Dichtfläche des Zylinderkopfes und/oder die korrespondierende Planfläche am Zylinderkurbelgehäuse nachgearbeitet werden muss, wodurch sich die Achsabstände zwischen der Kurbelwelle und der Nockenwelle und damit verbunden die Zahneingriffsverhältnisse an den Stirnzahnrädern nachteilig verändern können.

Durch die AT 001 616 U1 ist ein Steuertrieb bekannt, bei dem die Stirnzahnräder auf der Kurbelwelle und der oben liegenden Nockenwelle über ein Zwischenzahnrad verbunden sind, das auf einem ortsveränderlichen Lagerzapfen gelagert ist. Der Lagerzapfen ist dabei über zwei Schwingen gehalten, die um die Drehachse der Nockenwelle und um die Drehachse der Kurbelwelle schwenkbar sind und die zueinander einen Winkel bilden. Verändern sich die Abstände der Drehachsen zwischen der Kurbelwelle und der Nockenwelle zum Beispiel durch Abplanung der Dichtfläche des Zylinderkopfes, so wird der Lagerzapfen des Zwischenzahnrades entsprechend verändert, wobei die geforderten Zahneingriffe aufrechterhalten bleiben.

Aufgabe der Erfindung ist es, ein Verfahren zur Kompensation einer Achsabstandsänderung am Steuertrieb einer ventilgesteuerten Brennkraftmaschine sowie einen Steuertrieb für eine ventilgesteuerte Brennkraftmaschine vorzuschlagen, das bzw. der bei einer robusten Konstruktion mit einfachen Mitteln einen exakten Ausgleich von bei Reparaturzuständen auftretenden Achsabständen und gegebenenfalls eine Nachjustierung der Ventilsteuerzeiten ermöglicht.

Die Lösung dieser Aufgabe gelingt bezüglich des Verfahrens mit den Merkmalen des Patentanspruchs 1 und des Patentanspruchs 3. Weitere vorteilhafte und besonders zweckmäßige Weiterbildungen der Erfindung sind Gegenstand der darauf rückbezogenen Unteransprüche.

Erfindungsgemäß wird vorgeschlagen, dass bei einer gezielt vorgegebenen Achsabstandsänderung im Reparaturfall anstelle eines Original-Zwischenzahnrads oder anstelle eines, einen Bestandteil eines Original-Zwischenzahnrads bildenden Original-Zahnrads ein ein- oder mehrspuriges Austausch-Zwischenzahnrad eingesetzt wird, das gegenüber der Original-Verzahnung so modifiziert ist, dass damit die Achsabstandsänderung ausgeglichen wird.

Durch die beiden Maßnahmen - gezieltes Abplanen zum Beispiel des Zylinderkopfes und die Verwendung eines die daraus resultierende, exakte Achsabstandsänderung ausgleichenden Zwischenzahnrads - gelingt es, mit einfachen Mitteln exakte Zahneingriffsverhältnisse wiederherzustellen.

In einer besonders einfachen konkreten Ausgestaltung der vorliegenden Erfindungsidee könnte zum Beispiel ein einspuriger Zahnradtrieb mit nur einem Zwischenzahnrad vorgesehen sein. Alternativ hierzu kann gemäß einer weiteren besonders bevorzugten Ausgestaltung vorgesehen sein, dass das Original-Zwischenzahnrad ein fertigungstechnisch einfach herstellbares einteiliges Zwischenzahnrad mit einheitlicher Verzahnung ist, während das Austausch-Zwischenzahnrad zwei hinsichtlich der Verzahnung unerschiedlich ausgebildete und bevorzugt eine gemeinsame Achse aufweisende bzw. in Axialrichtung hintereinander angeordnete Zahnräder aufweist. Das eine Zahnrad ist hierbei über das Stirnzahnrad auf der Kurbelwelle unmittelbar oder mittelbar angetrieben und bildet Bestandteil einer ersten Zahnradspur, während das zweite Zahnrad unmittelbar oder mittelbar mit dem, bevorzugt bezüglich des Stirnzahnrads der Kurbelwelle spurversetzten, Stirnzahnrad auf der Nockenwelle in Eingriff ist und Bestandteil einer zweiten Zahnradspur bildet. Mit einem derartigen Aufbau gelingt auf einfache und zuverlässige Weise der funktionssichere Ausgleich einer reparaturbedingten Achsabstandsänderung.

Gemäß einer konkreten Ausgestaltung hierzu weist das Bestandteil der zweiten Zahnradspur bildende zweite Zahnrad eine zur Verzahnung des Original-Zwischenzahnrads identische Verzahnung auf, da sich der Achsabstand innerhalb des Zylinderkopfes nicht verändert hat. Dagegen weist das Bestandteil der ersten Zahnradspur bildende erste Zahnrad eine gegenüber der Verzahnung des Original-Zwischenrads unterschiedliche Verzahnung auf, um den durch die Bearbeitung der Flanschfläche geänderten Achsabstand zu berücksichtigen.

Gemäß einer alternativen Ausführungsvariante kann vorgesehen sein, dass das Original-Zwischenzahnrad zwei hinsichtlich der Verzahnung gleich ausgebildete und bevorzugt eine gemeinsame Achse aufweisende bzw. in Axialrichtung hintereinander angeordnete Zahnräder aufweist, wobei das eine, erste Zahnrad über das Stirnzahnrad auf der Kurbelwelle unmittelbar oder mittelbar angetrieben ist und Bestandteil einer ersten Zahnradspur bildet, während das zweite Zahnrad unmittelbar oder mittelbar mit dem, bevorzugt bezüglich des Stirnzahnrads der Kurbelwelle spurversetzten, Stirnzahnrad auf der Nockenwelle in Eingriff ist und Bestandteil einer zweiten Zahnradspur bildet. Weiter ist das Austausch-Zwischenzahnrad ein hinsichtlich der Verzahnung unterschiedlich zu einem der beiden Zahnräder, insbesondere unterschiedlich zu dem ersten Zahnrad, ausgebildetes Zahnrad. Mit einem derartigen Aufbau kann ebenfalls auf einfache und funktionssichere Weise ein zuverlässiger Ausgleich einer reparaturbedingten Achsabstandsänderung ausgeglichen werden, wobei nur eines der Original-Zahnräder ausgetauscht werden muss. Zudem ermöglicht ein derartiger Aufbau auch im Originalzustand die Ausgestaltung des Zwischenzahnrades als Einstellzahnrad, wie dies nachfolgend noch näher beschrieben wird.

Die Modifikation des Zwischenzahnrads kann grundsätzlich auf unterschiedliche Weise durchgeführt werden; insofern wird ausdrücklich darauf hingewiesen, dass die Begrifflichkeit "unterschiedliche Verzahnung" sehr weit auszulegen und in einem umfassenden Sinne zu verstehen ist, die sämtliche den geänderten Achsabstand ausgleichende Maßnahmen umfasst und somit nicht nur auf die Ausgestaltung und Anzahl der Zähne beschränkt ist. Dementsprechend ist gemäß einer besonders bevorzugten und fertigungs- sowie herstellungstechnisch einfach umsetzbaren Ausführungsform vorgesehen, dass die unterschiedliche Verzahnung der gegeneinander auszutauschenden Zahnräder durch unterschiedliche Profilverschiebungen und/oder durch unterschiedliche Kopfkreis- und/oder Fußkreisdurchmesser gebildet ist, wobei bevorzugt vorgesehen ist, dass die gegeneinander auszutauschenden Zahnräder eine jeweils gleiche Zähnezahl aufweisen. Damit können auf einfache Weise Schwergängigkeiten oder erhöhter Verschleiß im Steuertrieb vermieden werden.

Das Bestandteil der ersten Zahnradspur bildende erste Zahnrad des Zwischenzahnrads kann ferner ein am Zylinderkopf drehbar gelagertes Zahnrad sein, das mit einem weiteren, kurbelgehäuseseitigen Zwischenzahnrad des Steuertriebs in Eingriff ist. Da Reparaturen in häufigerem Maße am Zylinderkopf auftreten, ist hier der Wechsel auf ein modifiziertes Zwischenzahnrad einfacher ausführbar, während der kurbelgehäuseseitige Triebteil unverändert bleiben kann.

In vorteilhafter Weiterbildung der Erfindung, die ausdrücklich auch separat und unabhängig von der Verfahrensführung beansprucht wird, können die Zahnräder des Zwischenzahnrads ein zweiteiliges Einstellzahnrad ausbilden und durch zwei in Umfangsrichtung zueinander verlagerbare sowie lösbar miteinander verbindbare Zahnräder ausgeführt sein. Liegen die Drehachsen der Zahnräder des Steuertriebs nicht in einer einheitlichen Ebene, was zumeist konstruktiv nicht möglich sein dürfte, so kann durch die Achsabstandsänderung im Reparaturfall auch eine über die Verzahnungen nicht ausgleichbare Steuerzeitenänderung in der Ventilsteuerung auftreten, die nunmehr über das Einstellzahnrad in einfacher Weise korrigierbar ist.
Die beiden Zahnräder können dabei zum Beispiel durch eine, eine Relativverlagerung in Umfangsrichtung ermöglichende Langloch- und/oder Schraubverbindung miteinander lösbar verbindbar sein. Eine derartige Ausgestaltung ist einfach herstellbar und funktionssicher zu bedienen.

In einer konstruktiv einfachen, montagegünstigen Anordnung können die beiden Zahnräder des Zwischenzahnrads bzw. Einstellzahnrads auf einem am Zylinderkopf angeordneten Lagerzapfen drehbar gelagert und mittels mehrerer umfangsversetzter Schrauben aneinander befestigbar sein, wobei eine zwischen den Zahnrädern vorgesehene, in eine Ringnut des Lagerzapfens eingreifende Sicherungsscheibe das Zwischenzahnrad bzw. Einstellzahnrad auf dem Lagerzapfen in axialer Richtung führt.

Schließlich können zur Vermeidung von Bauteilverwechslungen die modifizierten Zwischenzahnräder mit einer visuellen Kennzeichnung versehen sein.

Das Original-Zwischenzahnrad ist bevorzugt ein einfach herstellbares einteiliges Zwischenzahnrad, das eine einheitliche Verzahnung aufweist. Grundsätzlich kann das Austausch-Zwischenzahnrad, insbesondere auch als zweiteiliges Einstellzahnrad wie vorstehend beschrieben, aber auch ständig verwendet werden.

Die vorstehend genannte Aufgabe wird bezüglich des Steuertriebs gelöst mit den Merkmalen des Patentanspruchs 8. Weitere vorteilhafte und besonders zweckmäßige Weiterbildungen der Erfindung sind Gegenstand der darauf rückbezogenen Unteransprüche.

Die sich mit einem derartigen Steuertrieb ergebenden Vorteile ergeben sich analog zu den vorstehend in Verbindung mit der Würdigung des erfindungsgemäßen Verfahrens gemachten Ausführungen, das heißt, dass hier auf vorteilhafte Weise lediglich durch den Austausch eines der Zahnräder ein funktionssicherer Ausgleich einer reparaturbedingten Achsabstandsänderung durchgeführt werden kann. Ebenso kann hier das Zwischenzahnrad auf einfache Weise als zweiteiliges Einstellzahnrad ausgebildet werden, wodurch auf einfache Weise eine Steuerzeitenanpassung bzw.-änderung durchgeführt werden kann. Insofern wird ausdrücklich auch auf die zuvor gemachten Ausführungen verwiesen.

Ferner betrifft die Erfindung eine bevorzugte Verwendung eines Steuertriebs.

Sämtliche in Verbindung mit der erfindungsgemäßen Verfahrensführung beschriebenen Merkmale können grundsätzlich auch beim erfindungsgemäßen Steuertrieb Verwendung finden und umgekehrt.

Ein Ausführungsbeispiel der Erfindung ist im Folgenden anhand der beigefügten, skizzenhaften Zeichnung näher erläutert. Es zeigen:
Fig. 1 eine Vorderansicht auf einen Steuertrieb einer ventilgesteuerten Brennkraftmaschine im Originalzustand, mit einem Stirnzahnrad auf der Kurbelwelle und zwei Zwischenzahnrädern, von denen eines als einteiliges, zweispuriges Zahnrad ausgeführt ist, das auf ein Stirnzahnrad auf der Nockenwelle abtreibt;
Fig. 2 eine Seitenansicht des Steuertriebs gemäß Fig. 1;
Fig. 3 eine Vorderansicht des Steuerantriebs nach Fig. 1 in einem Reparaturzustand der Brennkraftmaschine, bei dem das zweispurige Zwischenzahnrad durch ein zweiteiliges Einstellzahnrad ersetzt ist;
Fig. 4 eine Seitenansicht des Steuertriebs nach Fig. 3; und
Fig. 5 in raumbildlicher Darstellung das auf einem zylinderkopfseitigen Lagerzapfen angeordnete Einstellzahnrad nach den Fig. 3 und 4, mit zwei aneinander befestigbaren Zahnrädern und einer axial führenden Sicherungsscheibe.

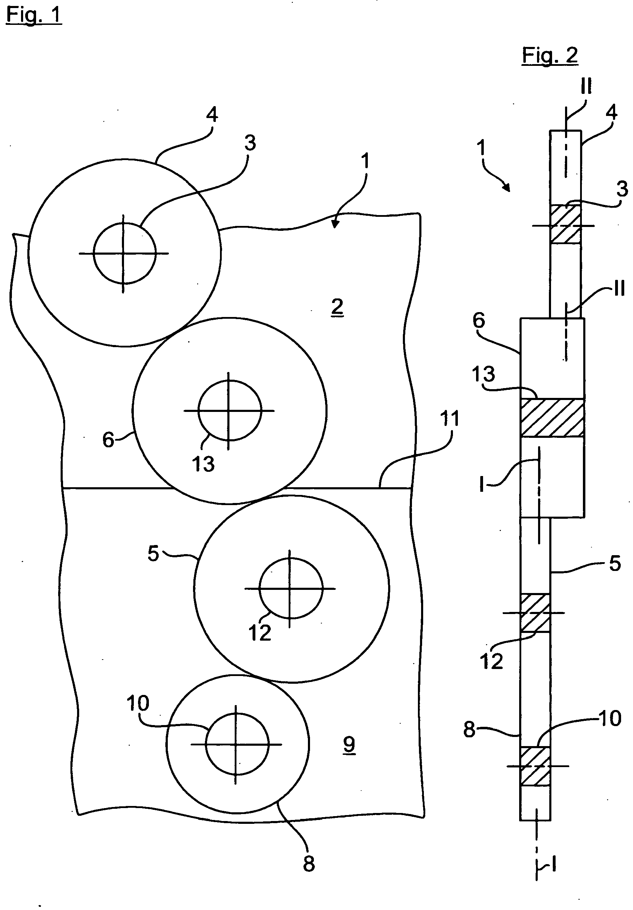

Die Fig. 1 und 2 zeigen skizzenhaft einen Steuertrieb 1 für eine ventilgesteuerte Brennkraftmaschine mit einer oben liegenden, in einem Zylinderkopf 2 drehbar gelagerten und in bekannter Weise Gaswechselventile betätigenden Nockenwelle 3 mit einem angetriebenen Stirnzahnrad 4, das über hier beispielhaft zwei Zwischenzahnräder 5, 6 von einem Stirnzahnrad 8 auf einer im Zylinderkurbelgehäuse 9 der Brennkraftmaschine drehbar gelagerten Kurbelwelle 10 angetrieben ist.
Der Zylinderkopf 2 ist in der eingezeichneten Dichtebene 11 unter Zwischenschaltung einer nicht dargestellten Zylinderkopfdichtung auf dem Zylinderkurbelgehäuse 9 befestigt. Der Steuertrieb 1 ist nur soweit dargestellt, als dies für das Verständnis der vorliegenden Erfindung erforderlich ist.

Die Zwischenzahnräder 5 und 6 sind auf Lagerzapfen 12, 13 drehbar gelagert, wobei das Zwischenzahnrad 5 wie ersichtlich am Kurbelgehäuse 9 und das Zwischenzahnrad 6 am Zylinderkopf 2 mit ihren Lagerzapfen 12, 13 stirnseitig an der Brennkraftmaschine angeordnet sind.

Der Steuertrieb 1 ist wie aus Fig. 2 ersichtlich zweispurig ausgelegt, mit einer ersten Zahnradspur I durch das antreibende Stirnzahnrad 8 auf der Kurbelwelle 10, das Zwischenzahnrad 5 auf dem kurbelgehäuseseitigen Lagerzapfen 12 und einer Spur des zweispurigen Zwischenzahnrads 6 auf dem Lagerzapfen 13.

Die zweite Zahnradspur II ist durch die zweite Zahnradspur des entsprechend breit und im Ausführungsbeispiel mit durchgehender und einheitlicher Verzahnung ausgelegten Zwischenzahnrads 6 sowie durch das Stirnzahnrad 4 auf der Nockenwelle 3 gebildet. Das Zwischenzahnrad 6 (und gegebenenfalls auch das Zwischenzahnrad 5) könnte zur Einstellung des Übersetzungsverhältnisses Kurbelwelle 10 zu Nockenwelle 3 auch ein Stufenzahnrad sein.

Das Stirnzahnrad 8 auf der Kurbelwelle 10 treibt über die Zwischenzahnräder 5 und 6 das Stirnzahnrad 4 auf der Nockenwelle in einem definierten Übersetzungsverhältnis, beispielsweise im Übersetzungsverhältnis 2 : 1 an. Die Einstellung der Ventilsteuerzeiten kann in bekannter Weise durchgeführt werden, indem die Kurbelwelle 10 und die Nockenwelle 3 in eine definierte Position festgestellt und dann die Zahnräder des Steuertriebs 1 bzw. die Zwischenzahnräder 5, 6 aufgesteckt werden.

Es versteht sich, dass die Achsabstände der Wellen und die Lagerzapfen der Zwischenzahnräder konstruktiv so festgelegt sind, dass bei definierten Verzahnungsverhältnissen ein laufruhiger, präziser Steuertrieb 1 vorliegt.

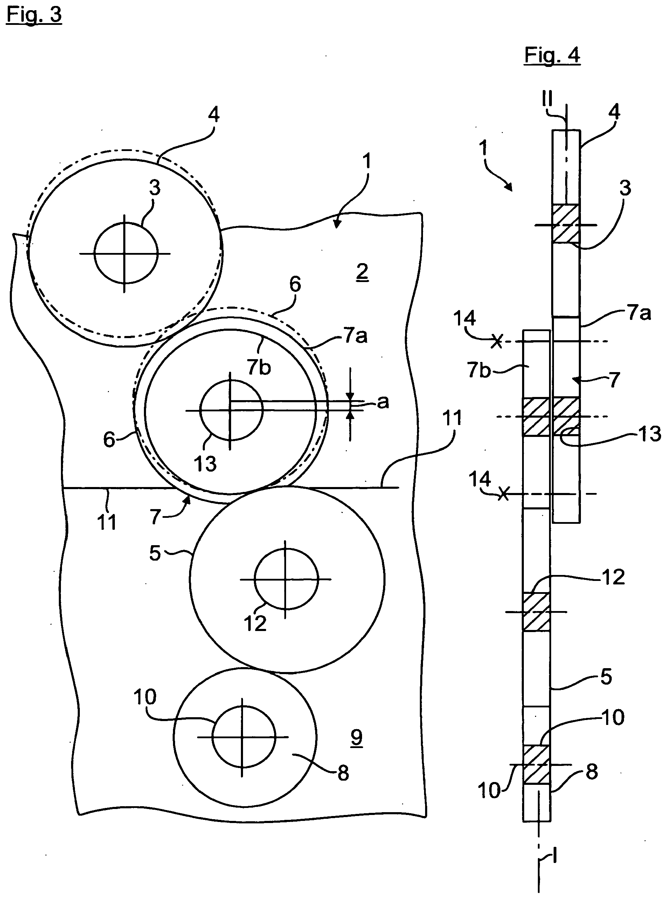

Die Fig. 3 und 4 zeigen den Steuertrieb 1 nach einem Reparaturfall bzw. einer Überholung der Brennkraftmaschine, bei der der Zylinderkopf 2 und/oder das Kurbelgehäuse 9 durch Abplanen an der Dichtfläche 11 um ein fest vorgegebenen Reparaturmaß zurückgesetzt wurden.

Daraus resultiert, dass sich der Abstand der Drehachsen von Nockenwelle 3 und Zwischenzahnrad 6 (nach Fig. 1) um das Maß a relativ zu den Drehachsen der Kurbelwelle 10 und des Zwischenzahnrads 5 definiert verändert bzw. verkürzt.

Um wieder ordnungsgemäße Zahneingriffsverhältnisse im Schnittstellenbereich (Dichtfläche 11) herzustellen, wird bzw. ist das zylinderkopfseitige Zwischenzahnrad 6 durch ein Einstellzahnrad 7 (Fig. 3, 4) ersetzt, das sich hier beispielhaft aus zwei Zahnrädern 7a und 7b zusammensetzt, die mittels mehrerer Schrauben 14 (in Fig. 4 nur angedeutet) aneinander befestigbar sind.

Dabei weist das mit dem Stirnzahnrad 4 der Nockenwelle 3 in Eingriff befindliche Zahnrad 7a der Zahnradspur II eine unveränderte, reguläre Verzahnung auf, während das mit dem kurbelwellenseitigen Zwischenzahnrad 5 in Eingriff befindliche Zahnrad 7b der Zahnradspur I bei unveränderter Zähnezahl in der Verzahnung (zum Beispiel durch Profilverschiebung und/oder bezüglich des Kopfkreis- und/oder Fußkreisdurchmessers) geringfügig um das Maß der Achsabstandsänderung a zurückgesetzt ist (übertrieben dargestellt), um wieder reguläre Zahneingriffsverhältnisse herzustellen. Schwergängigkeiten und/oder erhöhter Verschleiß im Steuertrieb 1 sind dadurch ausgeschlossen.

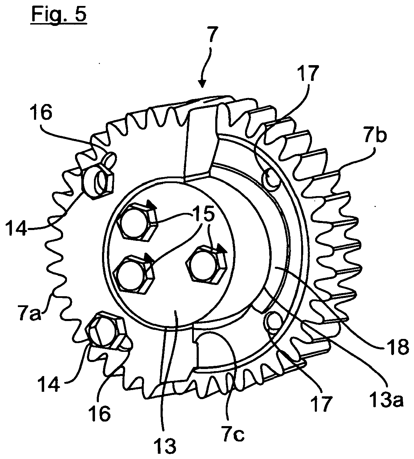

Die Fig. 5 zeigt das Einstellzahnrad 7 in raumbildlicher Darstellung, dessen Lagerzapfen 13 hier mittels lediglich beispielhaft dreier Schrauben 15 am Zylinderkopf 2 (nicht dargestellt) befestigt ist.

Die die Zahnräder 7a und 7b des Einstellzahnrads 7 aneinander haltenden Schrauben 14 durchgreifen langlochförmige Ausnehmungen 16 im Zahnrad 7a und wirken mit korrespondierenden Gewindebohrungen 17 im zweiten Zahnrad 7b zusammen. Durch Lockern der Schrauben 14 können die beiden Zahnräder 7a, 7b relativ zueinander in Umfangsrichtung verstellt werden.

Zwischen den beiden axial unmittelbar benachbarten Zahnrädern 7a, 7b ist eine U-förmige Sicherungsscheibe 18 eingeschoben, die radial innenliegend in eine Umfangsnut 13a des Lagerzapfens 13 eingreift und die radial außenliegend in einer ringförmigen Ausnehmung 7c des Zahnrads 7a gehalten ist.

Mittels der Sicherungsscheibe 18 werden die beiden Zahnräder 7a, 7b axial unverschiebbar auf dem Lagerzapfen 13 justiert und bilden mit diesem eine Vormontageeinheit, sobald die beiden Zahnräder 7a, 7b mittels der Schrauben 14 aneinander lose befestigt sind. Die Sicherungsscheibe 18 beeinträchtigt aber nicht die freie Drehbarkeit des Einstellzahnrads 7 auf dem Lagerzapfen 13.

Der Steuertrieb 1 kann im Neuzustand der Brennkraftmaschine (Fig. 1 und 2) mit einem einheitlichen Zwischenzahnrad 6 entsprechender Breite (gleich den beiden Zahnrädern 7a, 7b) ausgeführt sein. Die Ventilsteuerzeit ist konstruktiv durch definierte Montage der gesamten Zahnräder 4, 5, 6 und 8 vorgegeben, wobei die Stirnzahnräder 4 und 8 zur Nockenwelle 3 und zur Kurbelwelle 10 genau fixiert sind.

Bei einer Reparatur oder Überholung der Brennkraftmaschine mit definierter Abplanung der Dichtfläche 11 um das fest vorgegebene Maß a wird entweder das Zwischenzahnrad 6 durch das Einstellzahnrad 7, wie zur Fig. 3 und 4 erläutert ersetzt, wobei das Zahnrad 7b entsprechend modifiziert ausgeführt ist.

Alternativ kann der Steuertrieb 1 aber auch bereits von vorneherein, das heißt im Original- bzw. Grundzustand ein zylinderkopfseitiges Zwischenzahnrad 7 als Einstellzahnrad aufweisen. Dann werden die gesamten Zahnräder 4, 5, 7 und 8 bei gelockerten Schrauben 14 am Einstellzahnrad 7 montiert, wobei die Kurbelwelle 10 und die Nockenwelle 3 mit Hilfe von angebrachten Markierungen an den Zahnrädern 4 und 8 oder unter Verwendung einer Einstelllehre in eine definierte Drehwinkellage zueinander (zum Beispiel in OT Lage des Kolbens des Zylinders 1) fixiert sind. Schließlich werden die Schrauben 14 des Einstellzahnrads 7 fest angezogen. Die Zahnräder 7a und 7b des Einstellzahnrads 7 sind dabei in der Original-Verzahnung gleich bzw. regulär ausgeführt.

Im Reparaturfall wird bei einem derartigen bereits vorhandenen, als Einstellzahnrad ausgebildeten Zwischenzahnrad 7 mit regulären Verzahnungen das Zahnrad 7b durch ein wie vorbeschrieben modifiziertes Zahnrad 7b ersetzt. Um Verwechslungen auszuschließen, sollte dieses modifizierte Zahnrad 7b eine visuelle Kennzeichnung aufweisen.

Die Erfindung ist nicht auf das dargestellte Ausführungsbeispiel des Steuertriebs 1 beschränkt. In einer einfachsten Ausführungsform könnte auch ein einspuriger Zahnradtrieb mit nur einem Zwischenzahnrad 6 bzw. 7 oder gegebenenfalls mit zwei Zwischenzahnrädern 5 und 6 bzw. 7 vorgesehen sein. Gegebenenfalls könnten eines oder beide Zwischenzahnräder 5 und 6 bzw. 5 und 7 zweispurig und gestuft ausgeführt sein, mit entsprechendem, axialen Versatz jeweils des Stirnzahnrads 8 auf der Kurbelwelle und des Stirnzahnrads 4 auf der Nockenwelle, um definierte Achsabstände im Steuertrieb 1 herzustellen.

### BEZUGSZEICHENLISTE

- 1: Steuertrieb
- 2: Zylinderkopf
- 3: Nockenwelle
- 4: Stirnzahnrad
- 5: Zwischenzahnrad
- 6: Zwischenzahnrad
- 7: Einstellzahnrad
- 7a: Zahnrad
- 7b: Zahnrad
- 7c: ringförmige Ausnehmung
- 8: Stirnzahnrad
- 9: Zylinderkurbelgehäuse
- 10: Kurbelwelle
- 11: Dichtfläche
- 12: Lagerzapfen
- 13: Lagerzapfen
- 13a: Ringnut
- 14: Befestigungsschrauben
- 15: Schrauben
- 16: Langlochförmige Ausnehmungen
- 17: Gewindebohrungen
- 18: Sicherungsscheibe

## Patentansprüche

1. Verfahren zur Kompensation einer Achsabstandsänderung am Steuertrieb einer ventilgesteuerten Brennkraftmaschine, deren zumindest eine Nockenwelle (3) im Zylinderkopf (2) der Brennkraftmaschine gelagert und über Stirnzahnräder angetrieben ist, wobei ein antreibendes Stirnzahnrad (8) auf der im Zylinderkurbelgehäuse (9) der Brennkraftmaschine gelagerten Kurbelwelle (10), ein angetriebenes Stirnzahnrad (4) auf der Nockenwelle (3) und zumindest ein auf einem Lagerzapfen gelagertes Zwischenzahnrad vorgesehen sind, und wobei der Steuertrieb ferner wenigstens ein Mitteln zum Ausgleich von sich durch Reparaturarbeiten ergebenden Achsabstandsänderungen zwischen der Kurbelwelle (10) und der Nockenwelle (3) aufweist, **dadurch gekennzeichnet,**
**dass** bei einer gezielt vorgegebenen Achsabstandsänderung (a) im Reparaturfall anstelle eines Original-Zwischenzahnrads (6) ein mehrspuriges Austausch-Zwischenzahnrad (7) eingesetzt wird, das gegenüber der Original-Verzahnung so modifiziert ist, dass damit die Achsabstandsänderung in einem definiertem Maße ausgeglichen ist,
**dass** das Original-Zwischenzahnrad (6) ein einteiliges Zwischenzahnrad (6) mit einheitlicher Verzahnung ist, und
**dass** das Austausch-Zwischenzahnrad (7) zwei hinsichtlich der Verzahnung unterschiedlich ausgebildete und bevorzugt eine gemeinsame Achse aufweisende Zahnräder (7a, 7b) aufweist, wobei das eine Zahnrad (7b) über das Stirnzahnrad (8) auf der Kurbelwelle (10) unmittelbar oder mittelbar angetrieben ist und Bestandteil einer ersten Zahnradspur (I) bildet, während das zweite Zahnrad (7a) unmittelbar oder mittelbar mit dem, bevorzugt bezüglich des Stirnzahnrads (8) der Kurbelwelle (10) spurversetzten, Stirnzahnrad (4) auf der Nockenwelle (3) in Eingriff ist und Bestandteil einer zweiten Zahnradspur (II) bildet.

2. Verfahren nach Anspruch 1, **dadurch gekennzeichnet, dass** das Bestandteil der zweiten Zahnradspur (II) bildende zweite Zahnrad (7a) eine zur Verzahnung des Original-Zwischenzahnrads (6) identische Verzahnung aufweist, während das Bestandteil der ersten Zahnradspur (I) bildende erste Zahnrad (7b) eine gegenüber der Verzahnung des Original-Zwischenrads (6) unterschiedliche Verzahnung aufweist.

3. Verfahren zur Kompensation einer Achsabstandsänderung am Steuertrieb einer ventilgesteuerten Brennkraftmaschine, deren zumindest eine Nockenwelle (3) im Zylinderkopf (2) der Brennkraftmaschine gelagert und über Stirnzahnräder angetrieben ist, wobei ein antreibendes Stirnzahnrad (8) auf der im Zylinderkurbelgehäuse (9) der Brennkraftmaschine gelagerten Kurbelwelle (10), ein angetriebenes Stirnzahnrad (4) auf der Nockenwelle (3) und zumindest ein auf einem Lagerzapfen gelagertes Zwischenzahnrad vorgesehen sind, und wobei der Steuertrieb ferner wenigstens ein Mittel zum Ausgleich von sich durch Reparaturarbeiten ergebenden Achsabstandsänderungen zwischen der Kurbelwelle (10) und der Nockenwelle (3) aufweist, **dadurch gekennzeichnet, dass** bei einer gezielt vorgegebenen Achsabstandsänderung (a) im Reparaturfall anstelle eines Original-Zahnrads (7b), das einen Bestandteil eines mehrspurigen und zwei Zahnräder (7a, 7b) aufweisenden Original-Zwischenzahnrads bildet, ein einspuriges Austausch-Zahnrad des Zwischenzahnrads (7) eingesetzt wird, das gegenüber der Original-Verzahnung so modifiziert ist, dass damit die Achsabstandsänderung in einem definiertem Maße ausgeglichen ist,

4. Verfahren nach Anspruch 3, **dadurch gekennzeichnet,**
**dass** das Original-Zwischenzahnrad (6) zwei hinsichtlich der Verzahnung gleich ausgebildete und bevorzugt eine gemeinsame Achse aufweisende Zahnräder (7a, 7b) aufweist, wobei das eine, erste Zahnrad (7b) über das Stirnzahnrad (8) auf der Kurbelwelle (10) unmittelbar oder mittelbar angetrieben ist und Bestandteil einer ersten Zahnradspur (I) bildet, während das zweite Zahnrad (7a) unmittelbar oder mittelbar mit dem, bevorzugt bezüglich des Stirnzahnrads (8) der Kurbelwelle (10) spurversetzten, Stirnzahnrad (4) auf der Nockenwelle (3) in Eingriff ist und Bestandteil einer zweiten Zahnradspur (II) bildet, und
**dass** das Austausch-Zahnrad ein hinsichtlich der Verzahnung unterschiedlich zu einem der beiden Zahnräder (7a, 7b), insbesondere unterschiedlich zu dem ersten Zahnrad (7b), ausgebildetes Zahnrad ist.

5. Verfahren nach einem der vorherigen Ansprüche, **dadurch gekennzeichnet, dass** die unterschiedliche Verzahnung der gegeneinander auszutauschenden Zahnräder (6, 7) durch unterschiedliche Profilverschiebungen und/oder unterschiedliche Kopfkreis- und/oder Fußkreisdurchmesser gebildet ist, wobei bevorzugt vorgesehen ist, dass die gegeneinander auszutauschenden Zahnräder (6, 7) eine jeweils gleiche Zähnezahl aufweisen.

6. Verfahren nach einem der vorhergehenden Ansprüche, **dadurch gekennzeichnet, dass** das Bestandteil der ersten Zahnradspur (I) bildende erste Zahnrad (7b) des Austausch-Zwischenzahnrads (7) ein am Zylinderkopf (2) drehbar gelagertes Zwischenzahnrad ist, das mit einem weiteren, kurbelgehäuseseitigen drehbar gelagerten Zwischenzahnrad (5) in Eingriff ist.

7. Verfahren nach einem der vorhergehenden Ansprüche, **dadurch gekennzeichnet, dass** die zwei Zahnräder (7a, 7b) des Austausch-Zwischenzahnrads (7) ein zweiteiliges Einstellzahnrad ausbilden und durch zwei in Umfangsrichtung relativ zueinander verlagerbare sowie lösbar miteinander verbindbare Zahnräder (7a, 7b) ausgebildet sind, wobei bevorzugt vorgesehen ist, dass die beiden Zahnräder (7a, 7b) durch eine, eine Relativverlagerung in Umfangsrichtung ermöglichende Langloch- und/oder Schraubverbindung miteinander lösbar verbindbar sind.

8. Steuertrieb für eine ventilgesteuerte Brennkraftmaschine, deren zumindest eine Nockenwelle (3) im Zylinderkopf (2) der Brennkraftmaschine gelagert und über Stirnzahnräder angetrieben ist, wobei ein antreibendes Stirnzahnrad (8) auf der im Zylinderkurbelgehäuse (9) der Brennkraftmaschine gelagerten Kurbelwelle (10), ein angetriebenes Stirnzahnrad (4) auf der Nockenwelle (3) und zumindest ein auf einem Lagerzapfen gelagertes Zwischenzahnrad vorgesehen sind, wobei das Zwischenzahnrad (7) oder wenigstens eines der Zwischenzahnräder (7) durch zwei Zahnräder (7a, 7b), vorzugsweise durch zwei hinsichtlich der Verzahnung gleich ausgebildete und/oder eine gemeinsame Achse aufweisende Zahnräder (7a, 7b), gebildet ist, wobei das eine Zahnrad (7b) über das Stirnzahnrad (8) auf der Kurbelwelle (10) unmittelbar oder mittelbar angetrieben ist und Bestandteil einer ersten Zahnradspur (I) bildet, während das zweite Zahnrad (7a) unmittelbar oder mittelbar mit dem, bevorzugt bezüglich des Stirnzahnrads (8) der Kurbelwelle (10) spurversetzten, Stirnzahnrad (4) auf der Nockenwelle (3) in Eingriff ist und Bestandteil einer zweiten Zahnradspur (II) bildet, **dadurch gekennzeichnet, dass** die zwei Zahnräder (7a, 7b) des Zwischenzahnrads (7) ein zweiteiliges Einstellzahnrad ausbilden und durch zwei in Umfangsrichtung relativ zueinander verlagerbare sowie lösbar miteinander verbindbare Zahnräder (7a, 7b) ausgebildet sind.

9. Steuertrieb nach Anspruch 8, **dadurch gekennzeichnet,dass** die beiden Zahnräder (7a, 7b) durch eine, eine Relativverlagerung in Umfangsrichtung ermöglichende Langloch- und/oder Schraubverbindung miteinander lösbar verbindbar sind.

10. Steuertrieb nach Anspruch 8 oder 9, **dadurch gekennzeichnet,dass** die beiden Zahnräder (7a, 7b) des Zwischenzahnrads (7) auf einem am Zylinderkopf (2) angeordneten Lagerzapfen (13) drehbar gelagert und mittels wenigstens eines Befestigungsmittels, vorzugsweise mittels mehrerer umfangsversetzter Befestigungsmittel, höchst bevorzugt mittels mehrerer Schrauben (14), aneinander befestigbar sind, wobei eine zwischen den beiden Zahnrädern (7a, 7b) vorgesehene, in eine Ringnut (13a) des Lagerzapfens (13) eingreifende Sicherungsscheibe (18) das Zwischenzahnrad (7) auf dem Lagerzapfen (13) in axialer Richtung führt.

11. Steuertrieb nach einem der Ansprüche 8 bis 10, dadurch **gekennzeichet**, dass das Bestandteil der ersten Zahnradspur (I) bildende erste Zahnrad (7b) des Zwischenzahnrads (7) ein am Zylinderkopf (2) drehbar gelagertes Zahnrad ist, das mit einem weiteren, kurbelgehäuseseitigen Zwischenzahnrad (5) in Eingriff ist.

12. Steuertrieb nach einem der Ansprüche 8 bis 11, **dadurch gekennzeichnet,dass** wenigstens eines der Zahnräder (7a, 7b) des Zwischenzahnrads (7), insbesondere das erste Zahnrad (7b) des Zwischenzahnrads (7), austauschbar angeordnet ist und durch ein hinsichtlich der Verzahnung unterschiedlich ausgebildetem Zahnrad ersetzbar ist, wobei bevorzugt vorgesehen ist, dass die unterschiedliche Verzahnung der gegeneinander austauschbaren Zahnräder (7a, 7b) des Zwischenzahnrads (7) untereinander durch unterschiedliche Profilverschiebungen und/oder unterschiedliche Kopfkreis- und/oder Fußkreisdurchmesser gebildet ist, vorzugsweise bei untereinander gleicher Zähnezahl.

13. Verwendung eines Steuertriebs nach einem der Ansprüche 8 bis 12 in einem Verfahren nach einem der Ansprüche 1 bis 7.

## Claims

1. Method for compensating for an axial spacing change on the timing drive of a valve-controlled internal combustion engine, the at least one camshaft (3) of which is mounted in the cylinder head (2) of the internal combustion engine and is driven via spur gearwheels, a driving spur gearwheel (8) being provided on the crankshaft (10) which is mounted in the cylinder crankcase (9) of the internal combustion engine, a driven spur gearwheel (4) being provided on the camshaft (3), and at least one intermediate gearwheel which is mounted on a bearing journal being provided, and, furthermore, the timing drive having at least one means for compensating for axial spacing changes between the crankshaft (10) and the camshaft (3) which result from repair work, **characterized in that**, in the case of a specifically predefined axial spacing change (a), a multiple-track replacement intermediate gearwheel (7) is used in the case of a repair instead of an original intermediate gearwheel (6), which replacement intermediate gearwheel (7) is modified with respect to the original toothing in such a way that the axial spacing change is compensated for to a defined extent in this way, **in that** the original intermediate gearwheel (6) is a single-piece intermediate gearwheel (6) with integrated toothing, and **in that** the replacement intermediate gearwheel (7) has two gearwheels (7a, 7b) which are of different configuration with regard to the toothing and preferably have a common axle, the one gearwheel (7b) being driven directly or indirectly via the spur gearwheel (8) on the crankshaft (10) and forming a constituent part of a first gearwheel track (I), whereas the second gearwheel (7a) is in engagement directly or indirectly with the spur gearwheel (4) on the camshaft (3), which spur gearwheel (4) preferably has an offset track with regard to the spur gearwheel (8) of the crankshaft (10), and forms a constituent part of a second gearwheel track (II).

2. Method according to Claim 1, **characterized in that** the second gearwheel (7a) which forms a constituent part of the second gearwheel track (II) has identical toothing to the toothing of the original intermediate gearwheel (6), whereas the first gearwheel (7b) which forms a constituent part of the first gearwheel track (I) has toothing which is different from the toothing of the original intermediate gear (6).

3. Method for compensating for an axial spacing change on the timing drive of a valve-controlled internal combustion engine, the at least one camshaft (3) of which is mounted in the cylinder head (2) of the internal combustion engine and is driven via spur gearwheels, a driving spur gearwheel (8) being provided on the crankshaft (10) which is mounted in the cylinder crankcase (9) of the internal combustion engine, a driven spur gearwheel (4) being provided on the camshaft (3), and at least one intermediate gearwheel which is mounted on a bearing journal being provided, and, furthermore, the timing drive having at least one means for compensating for axial spacing changes between the crankshaft (10) and the camshaft (3) which result from repair work, **characterized in that**, in the case of a specifically predefined axial spacing change (a), a single-track replacement gearwheel of the intermediate gearwheel (7) is used in the case of a repair instead of an original gearwheel (7b) which forms a constituent part of a multiple-track original intermediate gearwheel which has two gearwheels (7a, 7b), which single-track replacement gearwheel is modified with respect to the original toothing in such a way that the axial spacing change is compensated for to a defined extent in this way,

4. Method according to Claim 3, **characterized in that** the original intermediate gearwheel (6) has two gearwheels (7a, 7b) which are of identical configuration with regard to the toothing and preferably have a common axle, the one, first gearwheel (7b) being driven directly or indirectly via the spur gearwheel (8) on the crankshaft (10) and forming a constituent part of a first gearwheel track (I), whereas the second gearwheel (7a) is in engagement directly or indirectly with the spur gearwheel (4) on the camshaft (3), which spur gearwheel (4) preferably has an offset track with regard to the spur gearwheel (8) of the crankshaft (10), and forms a constituent part of a second gearwheel track (II), and **in that** the replacement gearwheel is a gearwheel which is of different configuration with regard to the toothing with respect to one of the two gearwheels (7a, 7b), in particular is of different configuration with respect to the first gearwheel (7b).

5. Method according to one of the preceding claims, **characterized in that** the different toothing of the gearwheels (6, 7) which are to be replaced by one another is formed by way of different profile shifts and/or different tip circle and/or root circle diameters, it preferably being provided that the gearwheels (6, 7) which are to be replaced by one another have a respectively identical number of teeth.

6. Method according to one of the preceding claims, **characterized in that** the first gearwheel (7b) of the replacement intermediate gearwheel (7), which first gearwheel (7b) forms a constituent part of the first gearwheel track (I), is an intermediate gearwheel which is mounted rotatably on the cylinder head (2) and is in engagement with a further crankcase-side, rotatably mounted intermediate gearwheel (5).

7. Method according to one of the preceding claims, **characterized in that** the two gearwheels (7a, 7b) of the replacement intermediate gearwheel (7) form a two-piece setting gearwheel and are configured by way of two gearwheels (7a, 7b) which can be moved in the circumferential direction relative to one another and can be connected releasably to one another, it preferably being provided that the two gearwheels (7a, 7b) can be connected releasably to one another by way of a slot and/or screw connection which makes a relative movement in the circumferential direction possible.

8. Timing drive for a valve-controlled internal combustion engine, the at least one camshaft (3) of which is mounted in the cylinder head (2) of the internal combustion engine and is driven via spur gearwheels, a driving spur gearwheel (8) being provided on the crankshaft (10) which is mounted in the cylinder crankcase (9) of the internal combustion engine, a driven spur gearwheel (4) being provided on the camshaft (3), and at least one intermediate gearwheel which is mounted on a bearing journal being provided, the intermediate gearwheel (7) or at least one of the intermediate gearwheels (7) being formed by way of two gearwheels (7a, 7b), preferably by way of two gearwheels (7a, 7b) which are of identical configuration with regard to the toothing and/or have a common axle, the one gearwheel (7b) being driven directly or indirectly via the spur gearwheel (8) on the crankshaft (10) and forming a constituent part of a first gearwheel track (I), whereas the second gearwheel (7a) is in engagement directly or indirectly with the spur gearwheel (4) on the camshaft (3), which spur gearwheel (4) preferably has an offset spur with regard to the spur gearwheel (8) of the crankshaft (10), and forms a constituent part of a second gearwheel track (II), **characterized in that** the two gearwheels (7a, 7b) of the intermediate gearwheel (7) form a two-piece setting gearwheel and are configured by way of two gearwheels (7a, 7b) which can be moved in the circumferential direction relative to one another and can be connected releasably to one another.

9. Timing drive according to Claim 8, **characterized in that** the two gearwheels (7a, 7b) can be connected releasably to one another by way of a slot and/or screw connection which makes a relative movement in the circumferential direction possible.

10. Timing drive according to Claim 8 or 9, **characterized in that** the two gearwheels (7a, 7b) of the intermediate gearwheel (7) are mounted rotatably on a bearing journal (13) which is arranged on the cylinder head (2), and can be fastened to one another by means of at least one fastening means, preferably by means of a plurality of fastening means which are offset over the circumference, most preferably by means of a plurality of bolts (14), a locking washer (18) which is provided between the two gearwheels (7a, 7b) and engages into an annular groove (13a) of the bearing journal (13) guiding the intermediate gearwheel (7) on the bearing journal (13) in the axial direction.

11. Timing drive according to one of Claims 8 to 10, **characterized in that** the first gearwheel (7b) of the intermediate gearwheel (7), which first gearwheel (7b) forms a constituent part of the first gearwheel track (I), is a gearwheel which is mounted rotatably on the cylinder head (2) and is in engagement with a further, crankcase-side intermediate gearwheel (5).

12. Timing drive according to one of Claims 8 to 11, **characterized in that** at least one of the gearwheels (7a, 7b) of the intermediate gearwheel (7), in particular the first gearwheel (7b) of the intermediate gearwheel (7), is arranged such that it can be exchanged, and can be replaced by way of a gearwheel of different configuration with regard to the toothing, it preferably being provided that the different toothing of the gearwheels (7a, 7b) of the intermediate gearwheel (7) which can be replaced by one another is formed among one another by way of different profile shifts and/or different tip circle and/or root circle diameters, preferably with a number of teeth which is identical among one another.

13. Use of a timing drive according to one of Claims 8 to 12 in a method according to one of Claims 1 to 7.

## Revendications

1. Procédé de compensation de la modification de l'entre-axe sur l'entraînement de commande d'un moteur à combustion interne commandé par soupapes dont au moins un arbre (3) à cames est monté dans la tête (2) du cylindre du moteur à combustion interne et est entraîné par l'intermédiaire de pignons dentés frontaux,
un pignon denté frontal entraîné (8) étant prévu sur l'arbre (10) de vilebrequin monté dans le carter (9) de vilebrequin et de cylindre du moteur à combustion interne,
un pignon denté frontal (4) entraîné étant prévu sur l'arbre (3) à cames et au moins un pignon denté intermédiaire étant monté sur un tourillon de montage,
l'entraînement de commande présentant en outre au moins un moyen de compensation des modifications d'entre-axe entre l'arbre (10) de vilebrequin et l'arbre (3) à cames qui résulte de travaux de réparation, **caractérisé en ce que**
lors d'une modification prédéterminée de manière contrôlée (a) de l'entre-axe en cas de réparation, au lieu d'un pignon denté intermédiaire d'origine (6), on utilise un pignon denté intermédiaire de remplacement (7) à plusieurs pistes, modifié par rapport à la denture d'origine de telle sorte que la modification de l'entre-axe soit compensée de manière définie,
**en ce que** le pignon denté intermédiaire d'origine (6) est un pignon denté intermédiaire (6) d'une seule pièce doté d'une denture unitaire et
**en ce que** le pignon denté intermédiaire de remplacement (7) présente deux pignons dentés (7a, 7b) dont les dentures ont des configurations différentes et qui présentent de préférence un axe commun, un pignon denté (7b) étant entraîné directement ou indirectement par l'intermédiaire du pignon denté frontal (8) prévu sur l'arbre (10) de vilebrequin et formant une partie d'une première piste (I) de pignon tandis que le deuxième pignon denté (7a) s'engage directement ou indirectement sur le pignon denté frontal (4) prévu sur l'arbre (3) à cames dont la piste est de préférence décalée par rapport au pignon denté frontal (8) de l'arbre (10) de vilebrequin et fait partie d'une deuxième piste (II) de pignon.

2. Procédé selon la revendication 1, **caractérisé en ce que** le deuxième pignon denté (7a) qui fait partie de la deuxième piste (II) de pignon denté présente une denture identique à la denture du pignon denté intermédiaire d'origine (6) tandis que le premier pignon denté (7b) qui fait partie de la première piste (I) de pignon denté présente une denture différente de la denture du pignon denté intermédiaire d'origine (6).

3. Procédé de compensation d'une modification d'entre-axe de la modification de l'entre-axe sur l'entraînement de commande d'un moteur à combustion interne commandé par soupapes dont au moins un arbre (3) à cames est monté dans la tête (2) du cylindre du moteur à combustion interne et est entraîné par l'intermédiaire de pignons dentés frontaux,
un pignon denté frontal entraîné (8) étant prévu sur l'arbre (10) de vilebrequin monté dans le carter (9) de vilebrequin et de cylindre du moteur à combustion interne,
un pignon denté frontal (4) entraîné étant prévu sur l'arbre (3) à cames et au moins un pignon denté intermédiaire étant monté sur un tourillon de montage,
l'entraînement de commande présentant en outre au moins un moyen de compensation des modifications d'entre-axe entre l'arbre (10) de vilebrequin et l'arbre (3) à cames qui résulte de travaux de réparation, **caractérisé en ce que**
lors d'une modification prédéterminée de manière contrôlée (a) de l'entre-axe en cas de réparation, au lieu d'un pignon denté d'origine (7b), qui forme une partie d'un pignon denté intermédiaire d'origine à plusieurs pistes et présentant deux pignons dentés (7a, 7b) on utilise un pignon denté de remplacement à une piste pour le pignon denté intermédiaire (7), modifié par rapport à la denture d'origine de telle sorte que la modification d'entre-axe soit ainsi compensée d'une mesure définie.

4. Procédé selon la revendication 3, **caractérisé en ce que en ce que** le pignon denté intermédiaire d'origine (6) présente deux pignons dentés (7a, 7b) dont les dentures ont des configurations identiques et qui présentent de préférence un axe commun, un premier pignon denté (7b) étant entraîné directement ou indirectement par l'intermédiaire du pignon denté frontal (8) prévu sur l'arbre (10) de vilebrequin et formant une partie d'une première piste (I) de pignon tandis que le deuxième pignon denté (7a) s'engage directement ou indirectement sur le pignon denté frontal (4) prévu sur l'arbre (3) à cames et dont la piste est de préférence décalée par rapport au pignon denté frontal (8) de l'arbre (10) de vilebrequin et fait partie d'une deuxième piste (II) de pignon et **en ce que** le pignon denté de remplacement est un pignon denté dont la denture a une configuration différente de celle de l'un des deux pignons dentés (7a, 7b) et en particulier de celle du premier pignon denté (7b).

5. Procédé selon l'une des revendications précédentes, **caractérisé en ce que** les différentes dentures des pignons dentés (6, 7) remplacés l'un par l'autre sont formées par différents décalages de profil et/ou différents diamètres de cercles de tête et/ou de cercles de pied, en prévoyant de préférence que les pignons dentés (6, 7) remplacés l'un par l'autre présentent un même nombre de dents.

6. Procédé selon l'une des revendications précédentes, **caractérisé en ce que** le premier pignon denté (7b) du pignon denté intermédiaire de remplacement (7), qui fait partie de la première piste (I) de pignon, est un pignon denté intermédiaire monté à rotation sur la tête (2) du cylindre et qui engage un autre pignon denté intermédiaire (5) monté à rotation sur le carter de vilebrequin.

7. Procédé selon l'une des revendications précédentes, **caractérisé en ce que** les deux pignons dentés (7a, 7b) du pignon denté intermédiaire de remplacement (7) forment un pignon denté en deux pièces et sont configurés par deux pignons dentés (7a, 7b) qui peuvent être déplacés l'un par rapport à l'autre dans la direction périphérique et être reliés l'un à l'autre de manière libérable, en prévoyant de préférence que les deux pignons dentés (7a, 7b) puissent être reliés l'un à l'autre de manière libérable par une liaison à trous oblongs et/ou une liaison filetée qui permet un déplacement relatif dans la direction périphérique.

8. Entraînement de commande pour moteur à combustion interne commandé par soupapes dont au moins dont au moins un arbre (3) à cames est monté dans la tête (2) du cylindre du moteur à combustion interne et est entraîné par l'intermédiaire de pignons dentés frontaux,
un pignon denté frontal entraîné (8) étant prévu sur l'arbre (10) de vilebrequin monté dans le carter (9) de vilebrequin et de cylindre du moteur à combustion interne,
un pignon denté frontal (4) entraîné étant prévu sur l'arbre (3) à cames et au moins un pignon denté intermédiaire étant monté sur un tourillon de montage,
le pignon denté intermédiaire (7) ou au moins l'un des pignons dentés intermédiaires (7) étant formé par deux pignons dentés (7a, 7b), de préférence par deux pignons dentés (7a, 7b) qui présentent la même configuration de denture et/ou un axe commun,
un pignon denté (7b) étant entraîné directement ou indirectement par l'intermédiaire du pignon denté frontal (8) prévu sur l'arbre (10) de vilebrequin et formant une partie d'une première piste (I) de pignon tandis que le deuxième pignon denté (7a) s'engage directement ou indirectement sur le pignon denté frontal (4) prévu sur l'arbre (3) à cames dont la piste est de préférence décalée par rapport au pignon denté frontal (8) de l'arbre (10) de vilebrequin et fait partie d'une deuxième piste (II) de pignon,
**caractérisé en ce que**
les deux pignons dentés (7a, 7b) du pignon denté intermédiaire (7) forment un pignon denté en deux pièces et sont configurés par deux pignons dentés (7a, 7b) aptes à être déplacés l'un par rapport à l'autre dans la direction périphérique et à être reliés l'un à l'autre de manière libérable.

9. Entraînement de commande selon la revendication 8, **caractérisé en ce que** les deux pignons dentés (7a, 7b) peuvent être reliés de manière libérable l'un à l'autre par une liaison à trous oblongs ou filetée qui permet un déplacement relatif dans la direction périphérique.

10. Entraînement de commande selon les revendications 8 ou 9, **caractérisé en ce que** les deux pignons dentés (7a, 7b) du pignon denté intermédiaire (7) sont montés à rotation sur un tourillon de montage (13) disposé sur la tête (2) du cylindre et être fixés l'un sur l'autre au moyen d'au moins un moyen de fixation, de préférence au moyen de plusieurs moyens de fixation répartis à la périphérie, et de la façon la plus préférable au moyen de plusieurs vis (14), une plaque de blocage (18) prévue entre les deux pignons dentés (7a, 7b) et s'engageant dans une rainure annulaire (13a) du tourillon de montage (13) guidant dans la direction axiale le pignon denté intermédiaire (7) sur le tourillon de montage (13).

11. Entraînement de commande selon l'une des revendications 8 à 10, **caractérisé en ce que** le premier pignon denté (7b) du pignon denté intermédiaire (7), qui fait partie de la première piste (I) de pignon, est un pignon denté monté à rotation sur la tête (2) du cylindre et qui engage un autre pignon denté intermédiaire (5) situé sur le carter de vilebrequin.

12. Entraînement de commande selon l'une des revendications 8 à 11, **caractérisé en ce qu'**au moins un des pignons dentés (7a, 7b) du pignon denté intermédiaire (7), en particulier le premier pignon denté (7b) du pignon denté intermédiaire (7) est disposé de manière à pouvoir être remplacé par un pignon denté dont la denture est configurée de manière différente, en prévoyant de préférence que la denture différente des pignons dentés (7a, 7b) remplaçables l'un par l'autre du pignon denté intermédiaire (7) sont formées par différents décalages de profilés et/ou différents diamètres de cercle de tête et/ou de cercle de pied, de préférence pour un même nombre de dents.

13. Utilisation d'un entraînement de commande selon l'une des revendications 8 à 12 dans un procédé selon l'une des revendications 1 à 7.
